(19) Europäisches Patentamt
European Patent Office
Office européen des brevets

(11) **EP 3 196 450 B1**

(12) **EUROPEAN PATENT SPECIFICATION**

(45) Date of publication and mention
of the grant of the patent:
**06.06.2018 Bulletin 2018/23**

(51) Int Cl.:
*F02D 41/40* (2006.01)          *F02B 23/06* (2006.01)
*F02D 35/02* (2006.01)          *F02D 41/00* (2006.01)

(21) Application number: **16203019.1**

(22) Date of filing: **08.12.2016**

(54) **CONTROLLER FOR INTERNAL COMBUSTION ENGINE**

STEUERGERÄT FÜR EINEN VERBRENNUNGSMOTOR

CONTRÔLEUR POUR MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2016 JP 2016008117**

(43) Date of publication of application:
**26.07.2017 Bulletin 2017/30**

(73) Proprietors:
• **SOKEN Inc.**
  **Shimohasumi-cho
  Nishio-shi,
  Aichi-ken 445-0012 (JP)**
• **TOYOTA JIDOSHA KABUSHIKI KAISHA**
  **Toyota-shi, Aichi-ken 471-8571 (JP)**

(72) Inventors:
• **ANEZAKI, Yukinobu**
  **Nishio-shi, Aichi-ken,, 445-0012 (JP)**

• **NISHIDA, Kentaro**
  **Toyota-shi, Aichi-ken,, 471-8571 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
**JP-A- 2013 160 194**

• **PAYRI F ET AL: "A complete 0D thermodynamic
predictive model for direct injection diesel
engines", APPLIED ENERGY, ELSEVIER
SCIENCE PUBLISHERS, GB, vol. 88, no. 12, 1
June 2011 (2011-06-01), pages 4632-4641,
XP028278829, ISSN: 0306-2619, DOI:
10.1016/J.APENERGY.2011.06.005 [retrieved on
2011-06-07]**

## Description

## Background

**Technical Field**

The present application relates to an internal combustion engine controller. In particular, it relates to a controller used for a compression self-ignition internal combustion engine, such as a diesel engine.

**Background Art**

In a compression self-ignition internal combustion engine, such as a diesel engine, an injector (a fuel injection valve) having a plurality of injection holes radially injects fuel directly into a cavity (combustion chamber) formed above the top of a piston. As a conventional technique applied to such an internal combustion engine, there is a known technique of improving the engine output and reducing discharge of smoke (soot) due to incomplete combustion by producing a swirl in a cylinder to effectively diffuse fuel spray injected from the injection holes in the cavity.

For example, Patent Literature 1 proposes a technique of adjusting the interval between fuel sprays adjacent in the direction of the swirl flow that are injected from adjacent injection holes to fall within a predetermined range that allows reduction of smoke production. In particular, according to the conventional technique, the interval described above is calculated from a swirl downstream-side spray edge angle, which is an angle between the central axis of the injection hole and the edge of the fuel spray injected from the injection hole on the downstream side in the direction of the swirl flow, a swirl upstream-side spray edge angle, which is an angle between the same central axis and the edge of the same fuel spray on the upstream side in the direction of the swirl flow, and the total number of injection holes. Then, at least one of the fuel injection condition of the injector and the opening of the swirl control valve (SCV) is changed to make the calculated interval fall within the predetermined range.

Following is a list of patent document which the applicant has noticed as related arts of the present application.

Patent Literature 1: JP2013-160194A
Patent Literature 2: JP2015-086797A
Patent Literature 3: JP06-101484A

## Summary

When the fuel spray hits the wall of the cavity, cooling loss occurs in which the heat of the flame in the vicinity of the wall is lost through the wall. In particular, during a high-load operation in which the fuel injection amount of the injector increases, the amount of the fuel hitting the wall of the cavity and therefore the amount of heat produced in the vicinity of the wall increase, so that the cooling loss increased accordingly. In addition, the velocity of the swirl in the cavity has a significant effect on the cooling loss. However, the conventional technique described above does not take the cooling loss into consideration. Thus, depending on the swirl velocity, the technique may increase the cooling loss, although the technique can reduce the amount of smoke production.

In view of at least one of above described problems, an object of the present application is to achieve both reduction of smoke production and reduction of cooling loss in a compression self-ignition internal combustion engine that uses a swirl to diffuse a fuel spray in a cavity.

A controller for an internal combustion engine according to the present application is applied to an internal combustion engine that includes an injector that is configured to radially inject a fuel through a plurality of injection holes into a cavity formed above a top surface of a piston at a center thereof and a swirl control valve that is configured to control a swirl velocity at a wall surface of the cavity. The controller for an internal combustion engine comprises fuel spray interval calculating means, index calculating means, and opening setting means. The fuel spray interval calculating means is configured to calculate, as a fuel spray interval, an interval between fuel sprays adjacent to each other in a direction of a swirl flow that are injected from adjacent injection holes of the injection holes. The index calculating means is configured to calculate a value, as an index of cooling loss, multiplying an inverse of an area of a collision face of the fuel spray injected from any of the injection holes that is formed when the fuel spray collides with the wall surface by a value correlated with heat transfer coefficient between the wall surface and the collided fuel spray with the wall surface. The opening setting means configured to set an opening of the swirl control valve so that the swirl velocity at the wall surface is equivalent to a velocity at which the fuel spray interval falls within a predetermined range and also the index becomes a minimum.

In the controller for an internal combustion engine according to the present application, the value correlated with heat transfer coefficient may be the swirl velocity ($V_{sw}$) at the wall surface raised to the power of 0.8.

In the controller for an internal combustion engine according to the present application, the area of the collision face may be calculated from a swirl downstream-side spray edge angle that is an angle from a central axis of the fuel spray injected from any of the injection holes to an edge of the fuel spray on a downstream side in the direction of the swirl flow, a swirl upstream-side spray edge angle that is an angle from the central axis to an edge of the fuel spray on an upstream side in the direction of the swirl flow, and a distance from a center of the cavity to the wall surface.

In the controller for an internal combustion engine according to the present application, the swirl downstream-side spray edge angle ($\theta_{DS}$) may be calculated by adding a value obtained by multiplying the swirl velocity (Vsw) at the wall surface, a diffusivity (A) of the fuel spray toward the downstream side in the direction of the swirl flow and time (timp) from the start of the fuel injection to the collision of the fuel spray onto the wall surface to half value of a fuel spray angle ($\theta$) that expresses spread of the fuel spray on the basis of the central axis.

In the controller for an internal combustion engine according to the present application, the swirl upstream-side spray edge angle ($\theta_{US}$) may be calculated as half value of a fuel spray angle ($\theta$) that expresses spread of the fuel spray on the basis of the central axis.

According to the present application, the opening of the swirl control valve is set so that the swirl velocity at the wall surface of the cavity is equivalent to a velocity at which the fuel spray interval falls within a predetermined range and the index of cooling loss becomes the minimum. The predetermined range is a range in which the amount of smoke production during combustion is less than a predetermined limit. The index of cooling loss is correlated with the amount of heat radiation through the wall surface of the cavity. Thus, if the swirl velocity at the wall surface of the cavity is adjusted to be equivalent to a velocity at which the fuel spray interval falls within the predetermined range and the index of cooling loss becomes at the minimum, the amount of smoke production during combustion is reduced to be less than the predetermined limit, and the amount of heat radiation through the wall surface of the cavity is minimized. In this way, the present application can provide both reduction of smoke production and reduction of cooling loss.

**Brief Description of Drawings**

Fig. 1 is a schematic diagram showing a general configuration of a system according to an embodiment of the present application;
Fig. 2 is a schematic diagram showing a partial region in a cylinder;
Fig. 3 is a graph showing relationships between the swirl ratio and the amount of smoke produced in a cavity (or the cylinder) and between the swirl ratio and the amount of heat radiation from the cavity;
Fig. 4 is a graph showing relationships between the heat flux, the velocity of movement of the flame and the temperature of the flame at a wall surface of the cavity at the time when the swirl ratio is changed;
Fig. 5 is a diagram for illustrating the cross-sectional area of a fuel spray at the wall surface of the cavity;
Fig. 6 is a graph showing a relationship between the inverse of the cross-sectional area of the fuel spray at the wall surface of the cavity and the temperature of the flame at the wall surface at the time when the swirl ratio is changed;
Fig. 7 is a graph showing a relationship between the index of cooling loss and the heat flux at the time when the swirl ratio is changed;
Fig. 8 is a flowchart for illustrating an operation of correcting an SCV opening performed by an ECU according to this embodiment; and
Fig. 9 shows an example of an operational state determination map.

**Detailed Description**

In the following, an embodiment of the present application will be described with reference to the drawings. In the drawings, like elements are denoted by like reference numerals, and redundant descriptions thereof will be omitted. The embodiment described below is not intended to limit the scope of the present application.

[General System Configuration]

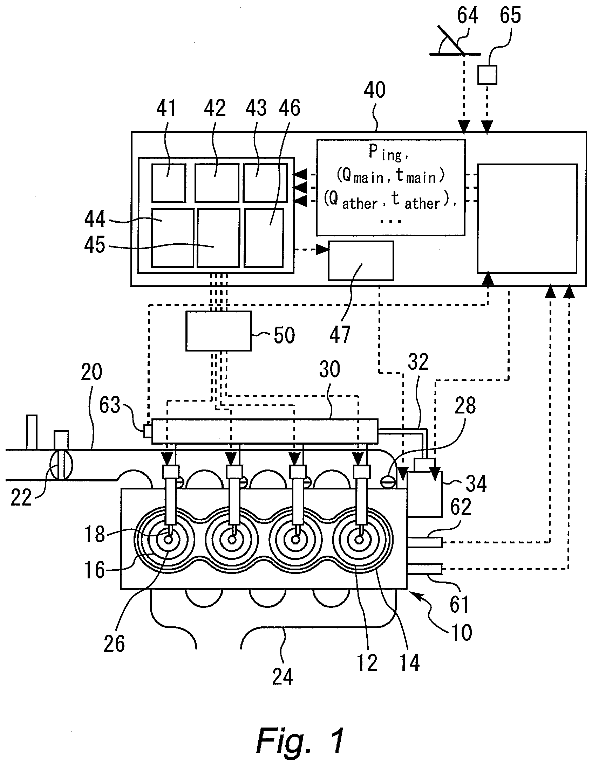

Fig. 1 is a schematic diagram showing a general configuration of a system according to an embodiment of the present application. The system shown in Fig. 1 includes a diesel engine 10 (also referred to simply as an engine 10 hereinafter) mounted on a vehicle. The engine 10 includes four cylinders 12. A cooling water channel (water jacket) 14 is formed outside the cylinders 12. The cooling water channel 14 is provided with a water temperature sensor 61 that provides an output responsive to the temperature of cooling water.

A piston 16, which is coupled to a crankshaft by a connecting rod (both are not shown), is disposed in the cylinder 12. A crank angle sensor 62 is disposed close to the crankshaft, and the crank angle sensor 62 outputs a pulse signal each time the crankshaft rotates a predetermined angle.

Direct-injection injectors 18 associated with the cylinders 12 are attached to a cylinder head (not shown) of the engine 10. The injector 18 is disposed above a top part of the cylinder 12 at the center thereof. The injector 18 includes a piezoelectric element (piezo element) disposed therein and is constituted by a piezo injector that appropriately opens to inject fuel into the cylinder 12.

More specifically, the injector 18 includes a nozzle needle (not shown) provided in a tip end part of a casing. The nozzle needle is capable of moving back and forth in the casing. The tip end part of the casing has a plurality of injection holes formed at regular intervals along the circumference thereof. When the nozzle needle is in the advanced position, the tip end part of the nozzle needle blocks the injection holes. As the nozzle needle is retracted (lifted), the injection holes are opened, and the fuel is radially injected because of the pressure difference between in the casing and in the cylinder 12.

The injector 18 includes a piezo actuator disposed therein and is connected to an electronic control unit (ECU) 40 via an electrical driving unit (EDU) 50. The EDU 50 is constituted by a well-known driving circuit that charges and discharges a piezo stack of the piezo actuator based on a command signal (injection command signal) from the ECU 40. The velocity of lift of the nozzle needle can be changed by controlling energization of the piezo actuator of the injector 18 (more specifically, by changing the velocity of electric charges applied to the piezo stack). Fuel injection control of the injector 18 will be described in detail later.

To the cylinder head of the engine 10, an intake system including an intake manifold 20 and a throttle valve 22 and an exhaust system including an exhaust manifold 24 and a catalysts device (not shown) are connected. When an intake valve (not shown) is opened, air is taken into the cylinder 12 through the intake system and compressed there in a compression stroke. Then, when the injector 18 injects fuel into the cylinder 12, combustion occurs. More specifically, the fuel combustion is achieved by injecting the fuel into a cavity 26 formed above a top surface of the piston 16 at the center thereof. The energy of the combustion causes the piston 16 to reciprocate, and the connecting rod converts the reciprocation into a rotational movement of the crankshaft, which provides an output engine torque. Exhaust gas discharged from the cylinder 12 to the exhaust system when an exhaust valve (not shown) is opened is purified by the catalyst device.

The intake system described above is provided with a swirl control valve (SCV) 28 that can change the velocity of a swirl flow (horizontal swirl flow) in the cylinder 12. More specifically, the cylinder 12 has two ports: a normal port and a swirl port. The SCV 28, which is a butterfly valve capable of being adjusted in opening, is provided in the normal port. The SCV 28 is coupled to an actuator (not shown), and the flow rate of the air passing through the normal port varies with the opening of the SCV 28, which is adjusted by the actuator driving the SCV 28.

As the opening of the SCV 28 increases, the amount of air taken into the cylinder 12 through the normal port increases, and the swirl produced by the swirl port becomes weaker accordingly, and a low swirl state (a state where the swirl velocity $V_{sw}$ is low) occurs in the cylinder 12. On the other hand, as the opening of the SCV 28 decreases, the amount of air taken into the cylinder 12 through the normal port decreases, and the swirl produced by the swirl port becomes stronger accordingly, and a high swirl state (a state where the swirl velocity $V_{sw}$ is high) occurs in the cylinder 12.

The injector 18 is connected to a common rail 30 serving as a fuel accumulator. A common rail pressure sensor 63, which detects the internal pressure (fuel pressure) of the common rail 30, is attached to the common rail 30. A booster pump 34 is connected to the common rail 30 by a fuel pipe 32, and a fuel tank (not shown) is connected to an intake side of the booster pump 34. Fuel is increased in pressure by the booster pump 34 before being supplied from the fuel tank to the common rail 30, and then is distributed from the common rail 30 to the injectors 18.

The ECU 40 includes a random access memory (RAM), a read-only memory (ROM) and a microprocessor (CPU), for example. The ECU 40 receives and processes signals from various sensors mounted on the vehicle. The various sensors include various sensors that provide information on the operational state of the engine, such as an accelerator opening sensor 64 that detects the amount of depression of an accelerator pedal by the driver of the vehicle and an air flowmeter 65 for detecting the intake air amount that is disposed in the intake system, in addition to the water temperature sensor 61, the crank angle sensor 62 and the common rail pressure sensor 63 described above. The ECU 40 processes the signals received from the sensors and makes various actuators operate according to a predetermined control program. The actuators that operate under the control of the ECU 40 include various actuators for controlling the operation of the engine, such as the injector 18, the SCV 28 and the booster pump 34 described above.

The ECU 40 issues a control signal to the booster pump 34 to control the pressure of the fuel supplied from the fuel tank to the common rail 30. The ECU 40 also issues a control signal to the SCV 28 to control the opening of the SCV 28 to adjust the swirl velocity $V_{sw}$. The ECU 40 also issues a control signal (injection command signal) to the injector 18 to perform fuel injection control of the injector 18.

The fuel injection control of the injector 18 involves main injection. The main injection is an injection operation intended to produce a torque of the engine 10. The amount of fuel for the main injection is determined so as to achieve a required torque, based on the operational state of the engine including the engine speed, the acceleration operation amount, the cooling water temperature and the intake air temperature. In general, the required torque increases as the engine speed (the engine speed calculated from the detection value of the crank angle sensor 62) increases or the accelerator operation amount (the amount of depression of the accelerator pedal detected by the accelerator opening sensor 64) increases. Thus, the determined fuel amount for the main injection increases as the engine speed increases or the accelerator operation amount increases.

In the fuel injection control, pilot injection or after-injection is performed as required. The pilot injection is an injection operation that is performed before the main injection to suppress the fuel ignition delay in the main injection and to achieve stable diffusion combustion. The fuel for the pilot injection is diverted from the fuel for the main injection. The after-injection is an injection operation that is performed after the main injection to increase the temperature of the exhaust gas. Unlike the pilot injection, the fuel for the after-injection is reserved separately from the fuel for the main injection.

The fuel injection pressure in the fuel injection control is determined from the internal pressure of the common rail 30. In general, as the internal pressure of the common rail, a target value of the pressure of the fuel supplied from the common rail 30 to the injector 18, that is, a target rail pressure, is set to be higher as the engine load increases or the engine speed increases. The ECU 40 adjusts the fuel discharge amount of the booster pump 34 to make the internal pressure of the common rail equal to the target rail pressure.

[Configuration of Control System]

As characteristic features of this embodiment, the ECU 40 includes in-cylinder state calculating means 41, swirl velocity calculating means 42, fuel spray edge angle calculating means 43, fuel spray interval calculating means 44, fuel spray cross-sectional area calculating means 45, cooling loss index calculating means 46, and SCV opening setting means 47.

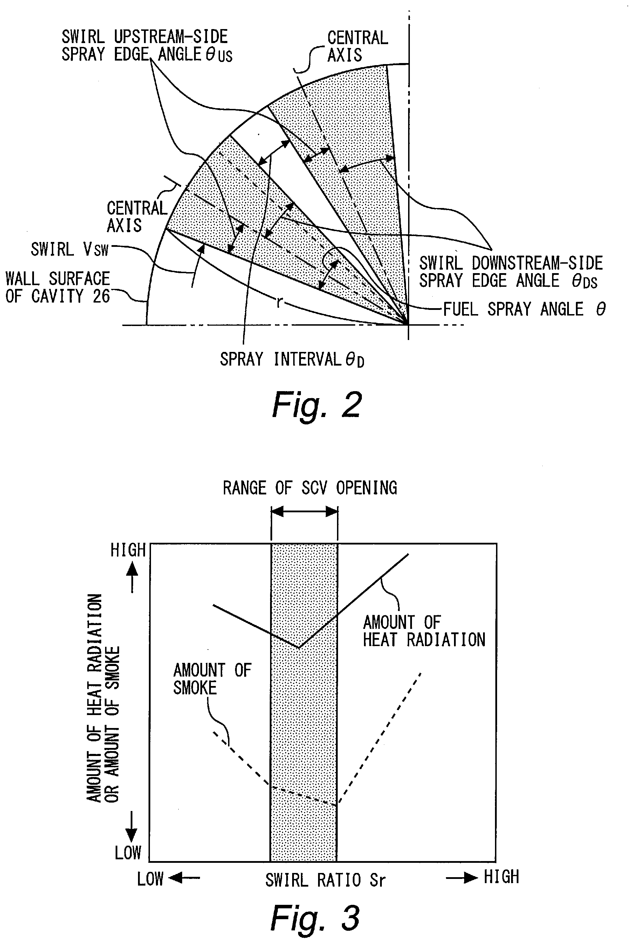

Functions of the means of the ECU 40 will be described with reference to Figs. 1 to 7. Fig. 2 is a schematic diagram showing a partial region in the cylinder 12. Fig. 2 shows fuel sprays injected in the main injection from adjacent two of the plurality of injection holes of the injector 18 (and moved by the swirl flow) viewed from above the cavity 26. As shown in Fig. 2, the front of the fuel sprays injected from the two injection holes has reached the wall surface (side wall surface) of the cavity 26, and the fuel sprays do not overlap with each other.

The in-cylinder state calculating means 41 shown in Fig. 1 reads signals indicative of the operational state of the engine, such as a pulse signal from the crank angle sensor 62, a cooling water temperature detection signal from the water temperature sensor 61, an accelerator opening signal from the accelerator opening sensor 64 and an intake air amount detection signal from the air flowmeter 65, and calculates the state in the cylinder 12 (the in-cylinder density, the intake air amount or the like). For example, the density of air flowing into the cylinder 12 is calculated based on the cooling water temperature detection signal from the water temperature sensor 61, and the fuel injection amount is calculated from the engine speed, which is calculated based on the pulse signal from the crank angle sensor 62, and the accelerator opening, which is detected by the accelerator opening sensor 64. The in-cylinder density is then calculated from the air density and the fuel injection amount. The method of calculating the in-cylinder density is not limited to this. For example, a map that defines the relationship between the in-cylinder density and the output signals of the various sensors may be prepared in advance by experiment or simulation and stored in the ROM of the ECU 40, and the in-cylinder density may be determined based on the map.

The swirl velocity calculating means 42 shown in Fig. 1 calculates the swirl velocity Vsw at the wall surface of the cavity 26 from the engine speed, which is calculated based on the pulse signal from the crank angle sensor 62, and the current SCV opening. Specifically, the swirl velocity Vsw at the wall surface of the cavity 26 is calculated according to the following equation (1).

$$\mathrm{Vsw} = r \times \omega \ ... \ (1)$$

In this equation, r denotes the distance from the center of the cavity 26 to the wall surface, $\omega$ denotes the swirl angular velocity, which is calculated according to the following equation (2).

$$\omega = 2\pi \times \mathrm{NE} \times \mathrm{Sr}/60 \ ... \ (2)$$

In this equation, NE denotes the engine speed calculated based on the pulse signal from the crank angle sensor 62. Sr denotes the swirl ratio, which is calculated according to an arithmetic expression involving as parameters the engine speed calculated based on the pulse signal from the crank angle sensor 62, the intake air amount detected by the air flowmeter 65 and the current SCV opening. Alternatively, a map that defines the relationship between the swirl velocity Vsw and the output signals of the various sensors may be prepared in advance by experiment or simulation and stored in the ROM of the ECU 40, and the swirl velocity Vsw may be determined based on the map.

The fuel spray edge angle calculating means 43 shown in Fig. 1 calculates a swirl downstream-side spray edge angle $\theta_{DS}$ from the swirl velocity Vsw calculated by the swirl velocity calculating means 42 and a fuel spray angle. The fuel spray angle is defined as a spread angle of the fuel spray injected from a particular injection hole of the injector and varies with the operational state of the engine. In this specification, the fuel spray angle is determined with respect to the spread angle in the operational state of the engine in which no swirl is produced, and a method of calculating the same will be described later. The fuel spray edge angle calculating means 43 also calculates a swirl upstream-side spray edge angle $\theta_{US}$ from the fuel spray angle. As shown in Fig. 2, the swirl downstream-side spray edge angle $\theta_{DS}$ is defined as an angle from the central axis of the fuel spray injected from the injection hole (the central axis of the fuel spray yet to be moved by the swirl flow (indicated by the alternate long and short dash line), which substantially agrees with the central axis of the injection hole) to the edge of the fuel spray on the downstream side in the direction of the swirl flow, and is calculated according to the following equation (3).

$$\theta_{DS} = (1/2) \times \text{fuel spray angle} + A \times Vsw \times \text{timp} \dots (3)$$

In this equation, timp denotes the time from the start of the fuel injection to the collision of the fuel spray onto the wall surface of the cavity 26 (the time required for the front of the fuel spray to reach the wall surface of the cavity 26), and is calculated according to an arithmetic expression involving penetration of the fuel spray and the injection duration as parameters. The penetration is calculated from an initial value of the fuel injection (an initial value of each injection in the case where a plurality of main injections (split main injections) is performed,) and the state in the cylinder 12 (the in-cylinder density, the intake air amount or the like) calculated by the in-cylinder state calculating means 41. The injection duration is calculated from the fuel injection amount and the fuel injection pressure. The reference symbol A denotes the diffusivity of the fuel spray toward the downstream side in the direction of the swirl flow. The diffusivity is 1.1, for example. The diffusivity is not limited to this value and can be determined by experiment or simulation.

As shown in Fig. 2, the fuel spray is circumferentially moved in the cavity 26 by the swirl flow while spreading by itself. Thus, the swirl downstream-side spray edge angle $\theta_{DS}$ increases in comparison to a case where the swirl flow is not produced (that is, the swirl downstream-side spray edge angle $\theta_{DS}$ expands toward the downstream side in the direction of the swirl flow). The equation (3) for calculating the swirl downstream-side spray edge angle $\theta_{DS}$ described above takes this fact into consideration.

As shown in Fig. 2, the swirl upstream-side spray edge angle $\theta_{US}$ is defined as an angle from the central axis of the fuel spray described above to the edge of the fuel spray on the upstream side in the direction of the swirl flow, and is calculated according to the following equation (4).

$$\theta_{US} = (1/2) \times \text{fuel spray angle} \dots (4)$$

The fuel spray angle in the equations (3) and (4) described above is calculated according to the following equation (5) based on "Waguri's momentum theory" that prescribes a relationship between the fuel spray angle $\theta$ and a fuel spray travel distance x and the following equation (6) relating to the fuel spray travel distance x ("Hiroyasu's formula").

$$x = \sqrt[4]{\rho_f / \rho_a} \sqrt{(d_n u_0 / tan\, 2\theta)} \sqrt{t_{imp}} \quad \cdots (5)$$

$$x = B \left( \Delta P / \rho_a \right)^{1/4} \sqrt{d_n t_{imp}} \quad \cdots (6)$$

In these equations, $\rho_f$ denotes the fuel density, $\rho_a$ denotes the atmospheric density (in-cylinder density), $d_n$ denotes the nozzle diameter, and $u_o$ denotes the injection velocity. timp denotes the wall surface collision time described above. B denotes a coefficient, and $\Delta P$ denotes the difference between the fuel injection pressure (internal pressure of the casing) and the in-cylinder atmospheric pressure (in-cylinder pressure). Alternatively, a map that defines the relationship between the fuel spray angle and the injection settings (the lift velocity of the nozzle needle, the fuel injection pressure, the fuel injection amount or the like) of the main injection may be prepared in advance by experiment or simulation and stored in the ROM of the ECU 40, and the fuel spray angle may be determined based on the fuel spray angle map.

The fuel spray interval calculating means 44 shown in Fig. 1 calculates a fuel spray interval $\theta_D$ from the swirl downstream-side spray edge angle $\theta_{DS}$ and the swirl upstream-side spray edge angle $\theta_{US}$ calculated by the fuel spray edge angle calculating means 43. The fuel spray interval $\theta_D$ is an interval between fuel sprays adjacent to each other and is calculated according to the following equation (7).

$$\theta_D = (360/\text{number of injection holes}) - (\theta_{DS} + \theta_{US}) \ldots (7)$$

In Fig. 2, the fuel sprays adjacent to each other do not overlap with each other, and there is a gap between the fuel sprays, so that the fuel spray interval $\theta_D$ assumes a positive value. On the other hand, if the fuel sprays adjacent to each other overlap with each other, the fuel spray interval $\theta_D$ assumes a negative value.

When the fuel spray interval $\theta_D$ is a negative value, the fuel sprays adjacent to each other partially overlap with each other, and the fuel concentration is excessive in the overlapping region, so that smoke may be produced. Even when the fuel spray interval $\theta_D$ is a positive value, if the fuel spray interval $\theta_D$ between the fuel sprays adjacent to each other is too large, oxygen in the cavity 26 is not sufficiently used, so that smoke may be produced. In other words, the smoke production can be reduced if the fuel spray interval $\theta_D$ falls within an appropriate range. The appropriate range can be set between the value at which the fuel sprays adjacent to each other do not overlap with each other and there is gap between the two (that is, the fuel spray interval $\theta_D = 0$) and the value at which there is an allowable gap between the two (that is, the fuel spray interval $\theta_D = Th$) ($0 < \theta_D < Th$). The allowable value Th is previously set by experiment or simulation as a value at which the amount of smoke production during combustion is less than a predetermined limit amount.

As can be seen from the equation (7) described above, the fuel spray interval $\theta_D$ varies with the swirl downstream-side spray edge angle $\theta_{DS}$ or the swirl upstream-side spray edge angle $\theta_{US}$. Furthermore, as can be seen from the equations (3) and (4), the swirl downstream-side spray edge angle $\theta_{DS}$ and the swirl upstream-side spray edge angle $\theta_{US}$ vary with the swirl velocity Vsw, the fuel spray angle $\theta$, the wall surface collision time timp or the like. That is, the fuel spray interval $\theta_D$ varies if a correlation parameter, such as the fuel injection condition of the injector 18 or the SCV opening, is changed. Therefore, the fuel spray interval $\theta_D$ can be adjusted to fall within the appropriate range by changing the fuel injection condition or the SCV opening.

However, if the SCV opening is changed, the swirl velocity also changes, so that the amount of heat radiation through the wall surface of the cavity 26 also changes. Fig. 3 is a graph showing relationships between the swirl ratio Sr and the amount of smoke produced in the cavity (or in the cylinder) and between the swirl ratio Sr and the amount of heat radiation from the cavity. In Fig. 3, the range of the SCV opening corresponds to the appropriate range of the fuel spray interval $\theta_D$ that satisfies the relation $0 < \theta_D < Th$. As shown in Fig. 3, both the amount of heat radiation and the amount of smoke have a minimum value in relation to the swirl ratio Sr. However, the swirl ratio Sr at which the amount of smoke is at the minimum and the swirl ratio Sr at which the amount of heat radiation is at the minimum do not always agree with each other. Thus, even if the swirl ratio Sr at which the amount of smoke is at the minimum is achieved by adjusting the SCV opening, the amount of heat radiation may not be sufficiently reduced.

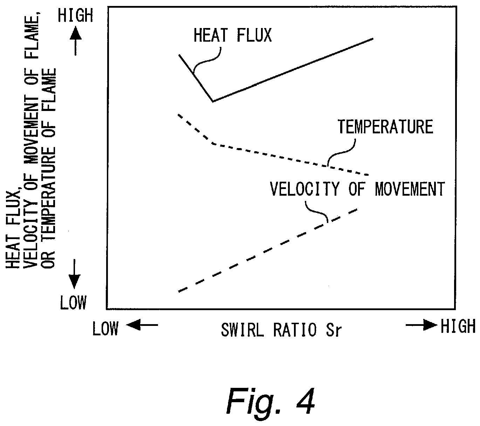

The amount of heat radiation through the wall surface of the cavity can be expressed as a time integral of a heat flux at the wall surface of the cavity multiplied by the area of the wall surface. The heat flux is commonly known to be proportional to the heat transfer coefficient, which is proportional to the velocity of the fluid raised to the power of 0.8, multiplied by the temperature difference between the wall surface and the fluid. Fig. 4 is a graph showing relationships, determined by experiment by the inventors, between the heat flux, the velocity of movement of flame and the temperature of the flame at the wall surface of the cavity at the time when the swirl ratio Sr is changed. As can be seen from Fig. 4, the velocity of movement of the flame is proportional to the swirl ratio Sr, and the velocity of movement of the flame increases as the swirl ratio Sr increases. On the other hand, the temperature of the flame decreases as the swirl ratio Sr increases, and the heat flux has a minimum value in relation to the swirl ratio Sr.

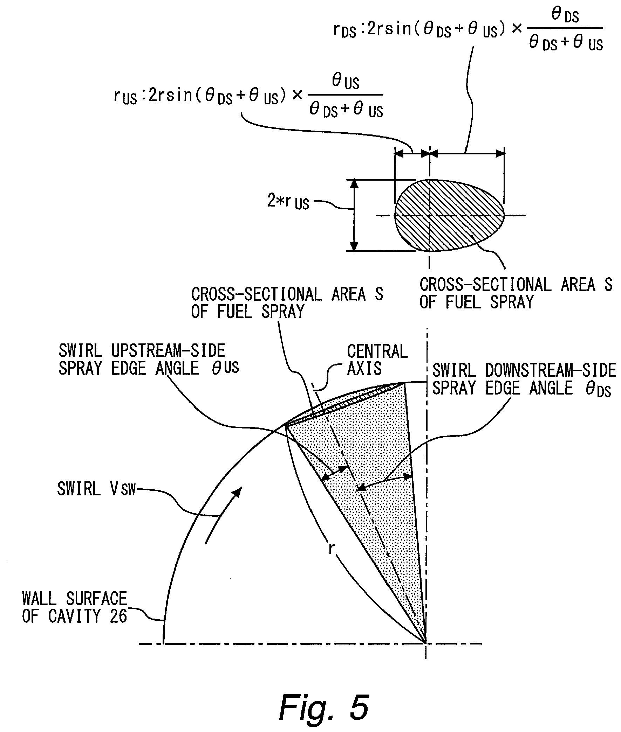

The experiment of visualizing the flame behavior conducted by the inventors has proved that the temperature of the flame decreases as the swirl ratio Sr increases because the flame is more likely to be diffused at the wall surface of the cavity. In view of this, the inventors have further examined the relationship between the cross-sectional area of the fuel spray at the wall surface of the cavity and the temperature of the flame at the wall surface at the time when the swirl ratio Sr is changed, using the model diagram shown in Fig. 5. The cross-sectional area S of the fuel spray shown in Fig. 5 is the area of the collision face of the fuel spray injected from the injection hole of the injector 18 that is formed when the front of the fuel spray collides with the wall surface of the cavity 26, and is approximately determined according to the following equation (8) from the swirl downstream-side spray edge angle $\theta_{DS}$, the swirl upstream-side spray edge angle Bus and the distance r from the center of the cavity 26 to the wall surface with reference to Fig. 2.

$$\text{Cross-sectional area } S = \text{area of semicircle (radius: } r_{US}) \text{ on upstream side of swirl}$$

$$+ \text{ area of semi-ellipse (longer radius: } r_{DS}, \text{ shorter radius: } r_{US})$$

$$= \pi \times r_{US} \times (r_{US} + r_{DS})/2 \text{ ... (8)}$$

In this equation, $r_{US}$ and $r_{DS}$ can be expressed by the following equations (9) and (10).

$$r_{US} = 2r\sin(\theta_{US} + \theta_{DS}) \times \theta_{US}/(\theta_{US} + \theta_{DS}) \text{ ... (9)}$$

$$r_{DS} = 2r\sin(\theta_{US} + \theta_{DS}) \times \theta_{DS}/(\theta_{US} + \theta_{DS}) \text{ ... (10)}$$

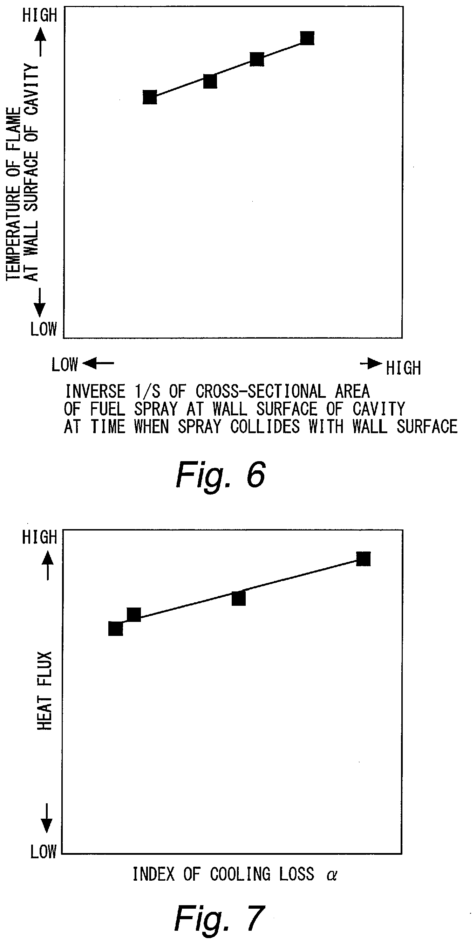

Fig. 6 is a graph showing a relationship, determined by experiment by the inventors, between the inverse $1/S$ of the cross-sectional area of the fuel spray at the wall surface of the cavity and the temperature of the flame at the wall surface at the time when the swirl ratio Sr is changed. As shown in Fig. 6, the temperature of the flame at the wall surface of the cavity is proportional to the inverse $1/S$ (that is, inversely proportional to the cross-sectional area $S$), and the temperature of the flame at the wall surface of the cavity decreases as the inverse $1/S$ decreases.

As described above, the heat flux is proportional to the heat transfer coefficient, which is proportional to the velocity of the fluid raised to the power of 0.8, multiplied by the temperature difference between the wall surface and the fluid. In addition, as described above with reference to Fig. 6, the inverse $1/S$ of the cross-sectional area of the fuel spray is correlated with the temperature of the flame at the wall surface of the cavity. Thus, by using the inverse $1/S$ instead of the temperature difference between the wall surface and the fluid, the amount of heat radiation through the wall surface of the cavity at the time when the swirl ratio Sr is changed, that is, the cooling loss at the time when the swirl ratio Sr is changed can be evaluated. Based on this consideration, an index $\alpha$ of cooling loss is defined by the following equation (11).

$$\alpha = (1/S) \times Vsw^{0.8} \text{ ... (11)}$$

Fig. 7 is a graph showing a relationship between the index $\alpha$ calculated at a swirl ratio Sr according to the equation (11) described above and the heat flux determined by experiment based on the same swirl ratio Sr. As shown in Fig. 7, the index $\alpha$ of cooling loss at the time when the swirl ratio Sr is changed is highly correlated with the heat flux. This result shows that the evaluation of the cooling loss at the time when the swirl ratio Sr is changed based on the index $\alpha$ is reliable.

The calculation of the cross-sectional area $S$ described above is performed by the fuel spray cross-sectional area calculating means 45 shown in Fig. 1. The calculation of the index $\alpha$ described above is performed by the cooling loss index calculating means 46 shown in Fig. 1.

The SCV opening setting means 47 shown in Fig. 1 corrects the SCV opening when the fuel spray interval $\theta_D$ calculated by the fuel spray interval calculating means 44 does not fall within the appropriate range described above. Even when the fuel spray interval $\theta_D$ calculated by the fuel spray interval calculating means 44 falls within the appropriate range described above, if the index $\alpha$ calculated by the cooling loss index calculating means 46 is not at the minimum in the appropriate range, the SCV opening setting means 47 corrects the SCV opening to change the swirl velocity Vsw. By correcting the swirl velocity Vsw in this way, the index $\alpha$ can be minimized while keeping the fuel spray interval $\theta_D$ in the appropriate range.

[Operation of Correcting SCV Opening]

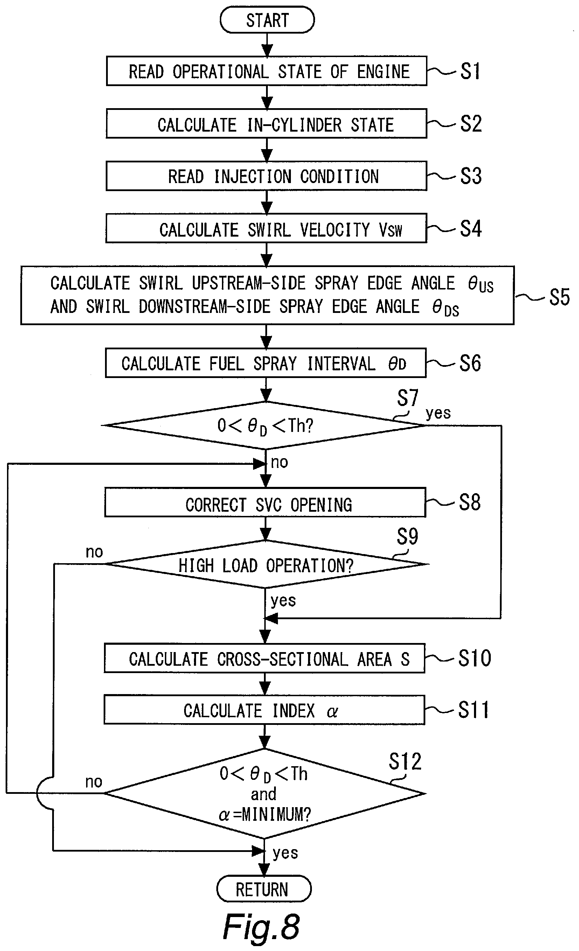

Fig. 8 is a flowchart for illustrating an operation of correcting the SCV opening performed by the ECU 40 according to this embodiment. The process shown in this flowchart is repeatedly performed every predetermined time or each time fuel injection (main injection) from the injector 18 occurs after the engine 10 is started.

First, in Step S1, the current operational state of the engine 10 is read. More specifically, signals indicative of the operational state of the engine 10, such as the cooling water temperature detection signal from the water temperature sensor 61, the pulse signal from the crank angle sensor 62, the accelerator opening signal from the accelerator opening sensor 64 and the intake air amount detection signal from the air flowmeter 65, are read.

In Step S2, the state in the cylinder 12 (the in-cylinder density, the intake air amount or the like) is then calculated from the operational state of the engine 10 read in Step S1 (the in-cylinder state calculation operation performed by the in-cylinder state calculating means 41).

In Step S3, the fuel injection condition is then read. More specifically, the fuel pressure from the common rail pressure sensor 63 and the fuel injection amount grasped based on the command signal output from the ECU 40 to the EDU 50 are read.

In Step S4, the swirl velocity Vsw at the wall surface of the cavity 26 is then calculated according to the equations (1) and (2) described above (the swirl velocity calculation operation performed by the swirl velocity calculating means 42).

In Step S5, the swirl upstream-side spray edge angle $\theta_{US}$ and the swirl downstream-side spray edge angle $\theta_{DS}$ are then calculated according to the equations (3) and (4) described above (the operation of calculation of the swirl upstream-side spray edge angle $\theta_{US}$ and the swirl downstream-side spray edge angle $\theta_{DS}$ performed by the fuel spray edge angle calculating means 43).

In Step S6, the fuel spray interval $\theta_D$ is then calculated according to the equation (7) described above (the fuel spray interval calculation operation performed by the fuel spray interval calculating means 44).

In Step S7, it is then determined whether or not the fuel spray interval $\theta_D$ calculated in Step S6 falls within the appropriate range described above. If it is determined that the fuel spray interval $\theta_D$ does not fall within the appropriate range, it can be determined that the SCV opening needs to be corrected, and the process proceeds to Step S8. On the other hand, if it is determined that the fuel spray interval $\theta_D$ falls within the appropriate range, it can be determined that the SCV opening does not currently need to be corrected, and the process skips Step S8 and proceeds to Step S9.

In Step S8, the SCV opening is corrected (the SCV opening correction operation performed by the SCV opening setting means 47). More specifically, if the fuel spray interval $\theta_D$ is greater than the allowable value Th described above, the SCV opening is reduced compared with the current SCV opening. As the SCV opening is reduced, the swirl velocity Vsw increases, so that the degree of diffusion of the fuel spray to the downstream side in the direction of the swirl flow increases, and the gap between the fuel sprays adjacent to each other decreases. If the fuel spray interval $\theta_D$ is smaller than zero, that is, if the fuel spray interval $\theta_D$ is a negative value, the SCV opening is increased compared with the current SCV opening. As the SCV opening is increased, the swirl velocity Vsw decreases, so that the degree of diffusion of the fuel spray to the downstream side in the direction of the swirl flow decreases, and the gap between the fuel sprays adjacent to each other increases.

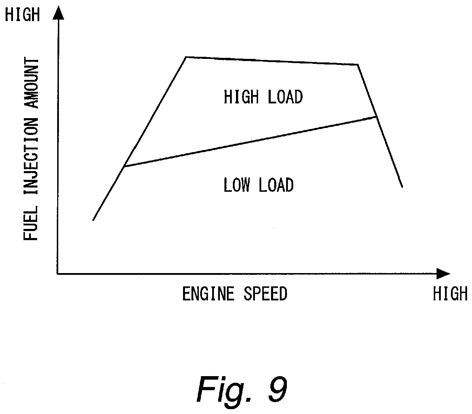

In Step S9, it is determined whether or not the engine 10 is running in a high load operation. More specifically, it is determined whether or not the engine 10 is running in the high load operation by applying the engine speed calculated from the pulse signal from the crank angle sensor 62 read in Step S1 and the fuel injection amount read in Step S3 to an operational state determination map shown in Fig. 9, for example. If it is determined that the engine 10 is running in the high load operation, the process proceeds to Step S10. Otherwise, it can be determined that the engine 10 is running in a low load operation where the fuel spray does not reach the wall surface of the cavity 26, and the current correction operation ends.

In Step S10, the cross-sectional area S is calculated according to the equation (8) described above (the fuel spray cross-sectional area calculation operation performed by the fuel spray cross-sectional area calculating means 45).

In Step S11, the index $\alpha$ is then calculated according to the equation (11) described above (the cooling loss index calculation operation performed by the cooling loss index calculating means 46).

In Step S12, it is then determined whether or not the corrected fuel spray interval $\theta_D$ calculated based on the SCV opening corrected in Step S8 falls within the appropriate range described above, and the index $\alpha$ calculated in Step S11 is at the minimum. If the processing of Step S8 has been skipped, it is determined only whether or not the index $\alpha$ calculated in Step S11 is at the minimum. Whether the index $\alpha$ is at the minimum or not is determined by previously determining a minimum value of the index $\alpha$ for each swirl velocity Vsw by experiment, simulation or the like, and determining whether or not the minimum value agrees with the index $\alpha$ calculated in Step S11. If it is determined that the corrected fuel spray interval $\theta_D$ falls within the appropriate range, and the index calculated in Step S11 is at the minimum, it can be determined that the SCV opening does not need to be further corrected, the current correction operation ends. Otherwise, the process returns to Step S8.

By repeating the process described above, when the engine 10 is running in the low load operation, the fuel spray interval $\theta_D$ can be made to fall within the appropriate range to reduce production of smoke. When the engine 10 is running in the high load operation, both reduction of smoke production and reduction of cooling loss can be achieved by adjusting the fuel spray interval $\theta_D$ to fall within the appropriate range minimizing the index $\alpha$.

The above embodiment has been described with regard to a case where the present application is applied to a diesel engine mounted on a vehicle. However, the present application is not limited to the application to the vehicle engine but can also be applied to any other engines. In addition, the present application is not limited to a particular number of cylinders of the engine or a particular type of the engine (such as the straight type engine, the V-engine, or the horizontally opposed engine).

**Claims**

1.  A controller for an internal combustion engine including an injector (18) that is configured to radially inject a fuel through a plurality of injection holes into a cavity (26) formed above a top surface of a piston (16) at a center thereof and a swirl control valve (28) that is configured to control a swirl velocity (Vsw) at a wall surface of the cavity (26), the controller comprising:

    fuel spray interval calculating means (44) that is configured to calculate, as a fuel spray interval ($\theta_D$), an interval between fuel sprays adjacent to each other in a direction of a swirl flow that are injected from adjacent injection holes of the injection holes;

    index calculating means (46) that is configured to calculate a value, as an index ($\alpha$) of cooling loss, multiplying an inverse of an area of a collision face of the fuel spray injected from any of the injection holes that is formed when the fuel spray collides with the wall surface by a value correlated with heat transfer coefficient between the wall surface and the collided fuel spray with the wall surface; and

    opening setting means (47) that is configured to set an opening of the swirl control valve (28) so that the swirl velocity (Vsw) at the wall surface is equivalent to a velocity at which the fuel spray interval ($\theta_D$) falls within a predetermined range and also the index ($\alpha$) becomes the minimum.

2.  The controller for an internal combustion engine according to claim 1, wherein the value correlated with heat transfer coefficient is the swirl velocity (Vsw) at the wall surface raised to the power of 0.8.

3.  The controller for an internal combustion engine according to claim 1 or 2, wherein the area of the collision face is calculated from a swirl downstream-side spray edge angle ($\theta_{DS}$) that is an angle from a central axis of the fuel spray injected from any of the injection holes to an edge of the fuel spray on a downstream side in the direction of the swirl flow, a swirl upstream-side spray edge angle ($\theta_{US}$) that is an angle from the central axis to an edge of the fuel spray on an upstream side in the direction of the swirl flow, and a distance (r) from a center of the cavity to the wall surface.

4.  The controller for an internal combustion engine according to claim 3, wherein the swirl downstream-side spray edge angle ($\theta_{DS}$) is calculated by adding a value obtained by multiplying the swirl velocity (Vsw) at the wall surface, a diffusivity (A) of the fuel spray toward the downstream side in the direction of the swirl flow and time (timp) from the start of the fuel injection to the collision of the fuel spray onto the wall surface to half value of a fuel spray angle ($\theta$) that expresses spread of the fuel spray on the basis of the central axis.

5.  The controller for an internal combustion engine according to claim 3 or 4, wherein the swirl upstream-side spray edge angle ($\theta_{US)}$ is calculated as half value of a fuel spray angle ($\theta$) that expresses spread of the fuel spray on the basis of the central axis.

**Patentansprüche**

1.  Steuervorrichtung für einen Verbrennungsmotor, der eine Einspritzeinrichtung (18), die konfiguriert ist, um einen Kraftstoff durch eine Mehrzahl von Einspritzlöchern in einen Hohlraum (26), der über einer oberen Fläche eines Kolbens (16) an einem Zentrum davon gebildet ist, radial einzuspritzen, und ein Drallsteuerungsventil (28), das konfiguriert ist, um eine Drallgeschwindigkeit (Vsw) an einer Wandfläche des Hohlraums (26) zu steuern, enthält, wobei die Steuervorrichtung aufweist:

    eine Berechnungseinrichtung (44) für ein Kraftstoffsprühintervall, die konfiguriert ist, um ein Intervall zwischen in einer Richtung eines Drallstromes zueinander benachbarten Kraftstoffsprühstößen, die von benachbarten Einspritzungslöcher der Einspritzungslöcher eingespritzt werden, als ein Kraftstoffsprühintervall ($\theta_D$) zu berechnen,

    eine Einrichtung (46) zum Berechnen einer Kennzahl, die konfiguriert ist, um einen Wert durch Multiplizieren eines Kehrwerts eines Gebiets einer Kollisionsfläche des von einem der Einspritzungslöcher eingespritzten Kraftstoffsprühstoßes, die gebildet wird, wenn der Kraftstoffsprühstoß mit der Wandfläche kollidiert, mit einem Wert, der mit einem Wärmeübertragungskoeffizienten zwischen der Wandfläche und dem mit der Wandfläche kollidierten Kraftstoffsprühstoß zusammenhängt, als eine Kennzahl ($\alpha$) eines Kühlverlusts zu berechnen und eine Öffnungseinstelleinrichtung (47), die konfiguriert ist, um eine Öffnung des Drallsteuerungsventils (28) einzustellen, so dass die Drallgeschwindigkeit (Vsw) an der Wandfläche äquivalent zu einer Geschwindigkeit, bei

der das Kraftstoffsprühintervall ($\theta_D$) in einen vorbestimmten Bereich fällt und außerdem die Kennzahl ($\alpha$) das Minimum wird, ist.

2. Steuervorrichtung für einen Verbrennungsmotor nach Anspruch 1, wobei der Wert, der mit dem Wärmeübertragungskoeffizienten zusammenhängt, die Drallgeschwindigkeit (Vsw) an der Wandfläche, die mit 0,8 potenziert ist, ist.

3. Steuervorrichtung für einen Verbrennungsmotor nach Anspruch 1 oder 2, wobei das Gebiet der Kollisionsfläche von einem Sprühkantenwinkel ($\theta_{DS}$) einer stromabwärtigen Drallseite, der ein Winkel von einer Zentrumsachse des Kraftstoffsprühstoßes, der von einem der Einspritzungslöcher eingespritzt wird, zu einer Kante des Kraftstoffsprühstoßes auf einer stromabwärtigen Seite in der Richtung der Drallstromes ist, einem Sprühstoßkantenwinkel ($\theta_{US}$) einer stromaufwärtigen Drallseite, der ein Winkel von der Zentrumsachse zu einer Kante des Kraftstoffsprühstoßes auf einer stromaufwärtigen Seite in der Richtung des Drallstromes ist, und einer Entfernung (r) von einem Zentrum des Hohlraums zu der Wandfläche berechnet wird.

4. Steuervorrichtung für einen Verbrennungsmotor nach Anspruch 3, wobei der Sprühkantenwinkel ($\theta_{DS}$) der stromabwärtigen Drallseite durch Hinzufügen eines Wertes, der durch Multiplizieren der Drallgeschwindigkeit (Vsw) an der Wandfläche, einer Diffusionsfähigkeit (A) des Kraftstoffsprühstoßes auf die stromabwärtigen Seite zu in der Richtung des Drallstroms und einer Zeit (timp) vom Start der Kraftstoffeinspritzung bis zur Kollision des Kraftstoffsprühstoßes an der Wandfläche erhalten wird, zu einem halben Wert eines Kraftstoffsprühwinkels ($\theta$), der eine Ausbreitung des Kraftstoffsprühstoßes auf der Grundlage der Zentrumsachse wiedergibt, berechnet wird.

5. Steuervorrichtung für einen Verbrennungsmotor nach Anspruch 3 oder 4, wobei der Sprühstoßkantenwinkel ($\theta_{US}$) der stromaufwärtigen Drallseite als ein halber Wert eines Kraftstoffsprühwinkels ($\theta$), der eine Ausbreitung des Kraftstoffsprühstoßes auf der Grundlage der Zentrumsachse wiedergibt, berechnet wird.

**Revendications**

1. Commande pour un moteur à combustion interne incluant un injecteur (18) qui est configuré pour injecter radialement un carburant par une pluralité de trous d'injection dans un cavité (26) formée au-dessus d'une surface supérieure d'un piston (16) en un centre de celle-ci et une soupape de commande de tourbillon (28) qui est configurée pour commander une vitesse de tourbillon (Vsw) au niveau d'une surface de paroi de la cavité (26), la commande comprenant :

des moyens de calcul d'intervalle de pulvérisation de carburant (44) qui sont configurés pour calculer, comme un intervalle de pulvérisation de carburant ($\theta_D$), un intervalle entre des pulvérisations de carburant adjacentes l'une à l'autre dans une direction d'un écoulement tourbillonnaire qui sont injectées depuis des trous d'injection adjacents des trous d'injection ;
des moyens de calcul d'indice (46) qui sont configurés pour calculer une valeur, comme un indice ($\alpha$) de perte de refroidissement, en multipliant un inverse d'une aire d'une face de collision du jet de carburant injecté depuis l'un quelconque des trous d'injection qui est formée quand le jet de carburant heurte la surface de paroi par une valeur corrélée avec le coefficient de transfert de chaleur entre la surface de paroi et le jet de carburant ayant heurté la surface de paroi ; et
des moyens de réglage d'ouverture (47) qui sont configurés pour régler une ouverture de la soupape de commande de tourbillon (28) de telle manière que la vitesse de tourbillon (Vsw) au niveau de la surface de paroi est équivalente à une vitesse à laquelle l'intervalle de pulvérisation de combustion ($\theta_D$) tombe dans une plage prédéterminée et aussi l'indice ($\alpha$) devient le minimum.

2. Commande pour un moteur à combustion interne selon la revendication 1, dans laquelle la valeur corrélée avec le coefficient de transfert de chaleur est la vitesse de tourbillon (Vsw) au niveau de la surface de paroi élevée à la puissance 0,8.

3. Commande pour un moteur à combustion interne selon la revendication 1 ou 2, dans laquelle l'aire de la face de collision est calculée à partir d'un angle de bord de jet côté aval de tourbillon ($\theta_{DS}$) qui est un angle depuis un axe central du jet de carburant injecté depuis l'un quelconque des trous d'injection jusqu'à un bord du jet de carburant sur un côté aval dans la direction de l'écoulement tourbillonnaire, un angle de bord de jet côté amont de tourbillon ($\theta_{US}$) qui est un angle depuis l'axe central jusqu'à un bord du jet de carburant sur un côté amont dans la direction de l'écoulement tourbillonnaire, et une distance (r) depuis un centre de la cavité jusqu'à la surface de paroi.

4. Commande pour un moteur à combustion interne selon la revendication 3, dans laquelle l'angle de bord de jet côté aval de tourbillon ($\theta_{DS}$) est calculé en ajoutant une valeur obtenue en multipliant la vitesse de tourbillon (Vsw) au niveau de la surface de paroi, une diffusivité (A) du jet de carburant vers le côté aval dans la direction de l'écoulement tourbillonnaire et un temps (timp) depuis le début de l'injection de carburant jusqu'à la collision du jet de carburant sur la surface de paroi à la moitié de la valeur d'un angle de pulvérisation de carburant ($\theta$) qui exprime l'étalement du jet de carburant sur la base de l'axe central.

5. Commande pour un moteur à combustion interne selon la revendication 3 ou 4, dans laquelle l'angle de bord de jet côté amont de tourbillon ($\theta_{US}$) est calculé comme une moitié de la valeur d'un angle de pulvérisation de carburant ($\theta$) qui exprime l'étalement du jet de carburant sur la base de l'axe central.

*Fig. 1*

SWIRL UPSTREAM-SIDE
SPRAY EDGE ANGLE $\theta_{US}$

CENTRAL
AXIS

CENTRAL
AXIS

SWIRL $V_{SW}$

WALL SURFACE
OF CAVITY 26

SWIRL DOWNSTREAM-SIDE
SPRAY EDGE ANGLE $\theta_{DS}$

FUEL SPRAY ANGLE $\theta$

$r$

SPRAY INTERVAL $\theta_D$

### Fig. 2

RANGE OF SCV OPENING

HIGH

AMOUNT OF HEAT RADIATION
OR AMOUNT OF SMOKE

AMOUNT OF
HEAT RADIATION

AMOUNT OF
SMOKE

LOW

LOW ← SWIRL RATIO Sr → HIGH

### Fig. 3

Fig. 4

$$r_{DS} : 2rsin(\theta_{DS} + \theta_{US}) \times \frac{\theta_{DS}}{\theta_{DS} + \theta_{US}}$$

$$r_{US} : 2rsin(\theta_{DS} + \theta_{US}) \times \frac{\theta_{US}}{\theta_{DS} + \theta_{US}}$$

$2*r_{US}$

CROSS-SECTIONAL AREA S
OF FUEL SPRAY

CROSS-SECTIONAL AREA S
OF FUEL SPRAY

SWIRL UPSTREAM-SIDE
SPRAY EDGE ANGLE $\theta_{US}$

CENTRAL
AXIS

SWIRL DOWNSTREAM-SIDE
SPRAY EDGE ANGLE $\theta_{DS}$

SWIRL V$_{SW}$

r

WALL SURFACE
OF CAVITY 26

## Fig. 5

HIGH

TEMPERATURE OF FLAME
AT WALL SURFACE OF CAVITY

LOW

LOW ← → HIGH

INVERSE 1/S OF CROSS-SECTIONAL AREA
OF FUEL SPRAY AT WALL SURFACE OF CAVITY
AT TIME WHEN SPRAY COLLIDES WITH WALL SURFACE

*Fig. 6*

HIGH

HEAT FLUX

LOW

INDEX OF COOLING LOSS $\alpha$

*Fig. 7*

Fig.8

*Fig. 9*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013160194 A
- JP 2015086797 A
- JP 6101484 A